**Europäisches Patentamt**

**European Patent Office**

**Office européen des brevets**

(11) Publication number: **0 064 515**

**B1**

## EUROPEAN PATENT SPECIFICATION

(45) Date of publication of patent specification: **03.09.86**

(21) Application number: **81903000.8**

(22) Date of filing: **27.10.81**

(86) International application number:
**PCT/SE81/00315**

(87) International publication number:
**WO 82/01460 13.05.82 Gazette 82/12**

(51) Int. Cl.⁴: **A 01 G 9/10, A 01 C 5/00**

(54) **A DEVICE INTENDED FOR PLANTING.**

(30) Priority: **30.10.80 SE 8007634**

(43) Date of publication of application:
**17.11.82 Bulletin 82/46**

(45) Publication of the grant of the patent:
**03.09.86 Bulletin 86/36**

(84) Designated Contracting States:
**DE FR GB NL**

(56) References cited:
**DE-A-2 557 573**

(73) Proprietor: **SANDIN, Nils Hakan**
**Landskronavägen 30**
**S-240 23 Dösjebro (SE)**

(72) Inventor: **SANDIN, Nils Hakan**
**Landskronavägen 30**
**S-240 23 Dösjebro (SE)**

(74) Representative: **Neihoff, Arne et al**
**AB STOCKHOLMS PATENTBYRA Box 3129**
**S-103 62 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a device intended for planting, and especially relates to a device used to hold or contain a plant and its root medium for planting in soil and, in planting on so called foil mulches or soil covers, anchor said mulches or covers. Such mulches conventionally consist of plastic film or paper, the purpose of which being to partly prevent or retard the development of weeds, partly prevent too a great evaporation.

There is a great need for a device which makes a rotational and mechanized planting of plants and vegetables possible. There is also a great need for such a device, with the aid of which an anchoring can be achieved in planting on foil mulches. According to the invention these and other needs are met.

DE—A—2 557 573 discloses a container for planting and growing a plant comprising a frame member and a sleeve. The frame member comprises a base section shaped as a closed surface, a plurality of ribs being secured in a spaced-apart relationship and disposed circumferentially of said base section to upstand therefrom. The sleeve is formed in a substantially tubular shape from thin flexible imperforate material, the sleeve being mounted about and supported for substantially the full length thereof by the ribs to define the container in cooperation with the frame member. The sleeve, forming a part of the container according to this German citation, is thus closed at its bottom.

The device according to the invention referred to above comprises a sleeve having a wall formed with cutouts extending in the longitudinal direction of the sleeve between a circumferentially extending upper part and a lower part, the upper and the lower parts being integrally formed with the rest of the wall of the sleeve. The device according to the invention is characterized in that the sleeve is open at the bottom, spikes being formed in the lower part of the sleeve. The feature that the sleeve is open at the bottom implies that in driving the device into the soil this exerts a pressure on the plant and its root medium contained in the sleeve which pressure propagates through the cutouts for establishing contact with the surrounding soil and for providing a reliable growth. Contrary to the disclosure of DE—A—2 557 573 the present inventor has quite unexpectedly found that a good contact with the surrounding soil and a reliable growth can be obtained if a planting sleeve is provided having an open bottom.

According to particular embodiment of the device according to the invention, which embodiment is intended for planting on a soil cover, the device is characterized by an anchoring device including an upper edge part and a lower edge part connected together by plural strips extending in the longitudinal direction, the strips having plural scores formed in a plane lying transverse to the strips, the anchoring device being adapted to surround the sleeve so that the lower edge part of the anchoring device during planting is pressed upwards as a force is applied to press to sleeve downwards into the soil, the lower edge part causing the strips to buckle and fold towards each other about the scores so that the folded strips overlie the soil cover and thereby retain the cover on the soil.

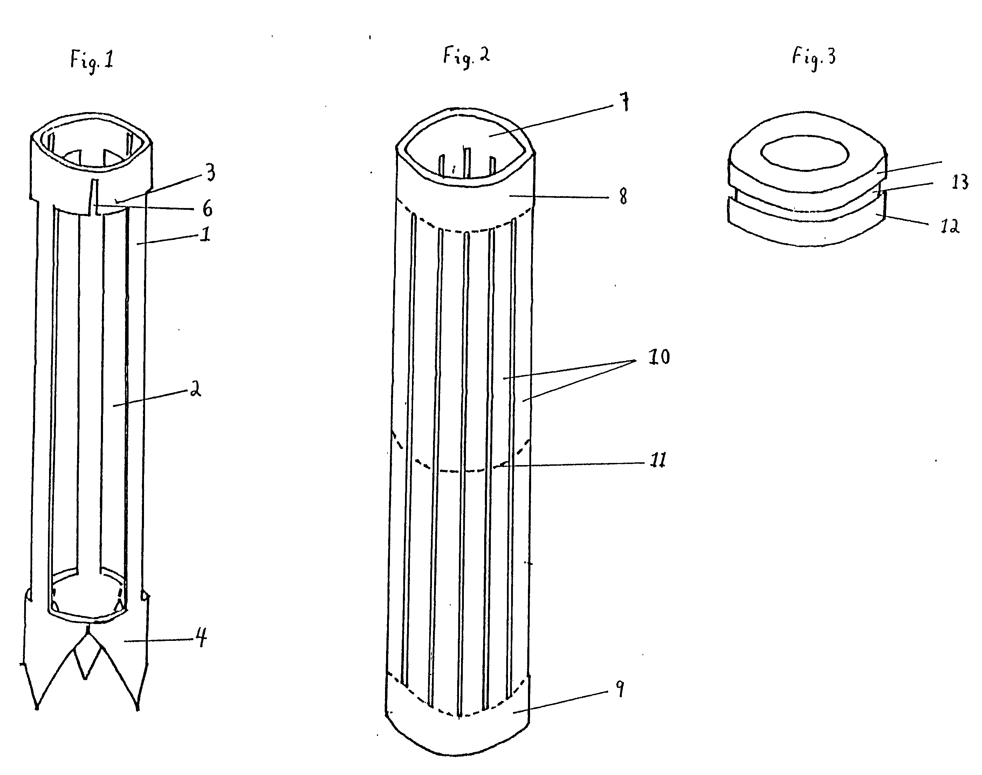

The invention will be further explained below with reference to the accompanying drawing, which shows preferred exemplary embodiments of the device according to the invention, and on which Fig. 1 shows a planting sleeve pertaining to the device, Fig. 2 shows an anchoring device which is intended to surround the planting sleeve shown in Fig. 1 in planting on a mulch, and Fig. 3 shows a squeeze means which can be applied on the upper part of the sleeve.

Referring now to Fig. 1 there is shown a planting sleeve 1 forming part of the device according to the invention, which is formed with cutouts 2 which extend in the longitudinal direction of the sleeve and start at the upper part 3 of the sleeve at a distance therefrom and end at the lower part 4 of the sleeve at a distance therefrom. In the lower part 4 of the sleeve there are formed spikes to make its penetration into the soil easier. The sleeve 1 is adapted to hold or contain a plant especially its roots and root medium, which for example can consist of mineral wool, such as rock wool, peat and similar materials. This root medium surrounds and protects the root from drying and has among others the ability to easily absorb water. When the plant has been planted, i.e. when the sleeve containing the plant and its root medium has been pressed down into the soil, the plant begins to grow and the roots have the possibility to establish a proper contact with the surrounding soil via the cutouts and thus secure a reliable growth. After a certain growth period the roots exert such a pressure on the solid wall parts of the sleeve that this gradually breaks. To facilitate this break of the sleeve it comprises, according to a preferred embodiment, at least two complementary parts extending in the vertical plane, i.e. at least two lengthwise sections which in pressing down the sleeve into the soil lie close to each other by a squeeze means 5 applied around the upper part 3 of the sleeve. The sleeve 1 shown in Fig. 1 has a circular cross section and in this case the squeeze means 5 comprises a ring 5. The sleeve can also have a square or a rectangular cross section and the squeeze means 5 can have a corresponding form.

To facilitate that the sleeve bursts after a certain growth period the sleeve can in accordance with another preferred embodiment show indications of fracture or notches 6 (of which one is shown in Fig. 1) formed in the upper edge 3 of the sleeve, each notch 6 being located adjacent a cutout 2 and extending in longitudinal direction from the lower edge of the upper wall part 3 to a location at a distance from its upper edge. The sleeve 1 can additionally or instead show kerfs which are provided in the lower part 4 of the sleeve.

As mentioned above the lower part 4 of the sleeve can be formed as a spike to make the pressing down of the sleeve into the soil easier. To this effect the lower part 4 of the sleeve can have two spikes, which have been provided by two substantially V-formed notches, of three spikes, such as in accordance with embodiment defined in Fig. 1, which have been provided by three substantially V-formed notches in the lower part 4 of the sleeve.

According to a third embodiment the sleeve comprises at least two sections, which are combined by way of a band or a lip, which at least partly extends around the upper edge part 3 of the sleeve.

In planting on soil covers, i.e. plastic foil or paper, the device according to the invention comprises an anchoring device 7 provided at the upper edge part 3 of the sleeve and surrounding the sleeve 1. Its main purpose is to anchor the plastic foil or the paper at the soil, but when it surrounds all the sleeve 1 it also prior to planting protects the root lump from drying and prevents the root from growing freely out through the cutouts of the sleeve. The anchoring device 7 comprises an upper edge part 8 and a lower edge part 9, which are connected together by plural strips 10, which extend in the longitudinal direction at a distance from each other. These strips 10 show scores 11 formed in a plane lying transverse to the strips, preferably a central plane to make a folding of the anchoring device possible. The sleeve and the anchoring device can be made in plastics or sleeve paper or a combination thereof. In planting on soil cover the lower edge part 9 of the anchoring device 7 is pressed upwards when the sleeve 1 is pressed downwards and the lower edge part 9 and the strips 10 are brought close to the soil cover and retain or anchor this.

In preparing the device for planting on soil cover a plant together with its root medium is brought into the sleeve, and this is then inserted into the anchoring device in such a way that this surrounds the sleeve. Then the squeeze means shown in Fig. 3 is applied on the upper part of the sleeve in such a way that the upper edge part 8 of the anchoring device is completely taken up by the depending part 12 of the squeeze means 5 and is firmly squeezed by this.

According to a preferred embodiment of the invention the squeeze means is provided with a circumferential groove 13, which makes it possible to move the plant from a magazine present in a planting machine to its planting mechanism. By applying a pressure to the squeeze means 5 the device according to the invention containing a plant is pressed down into the soil. By this the plant is thus planted simultaneously as the soil cover is anchored.

According to another preferred embodiment of the device according to the invention the length of the sleeve 1 is somewhat less than the length of the anchoring device 7. The main reason therefor is the following. In planting on soil cover it is important that the anchoring device with its lower edge part 9 first penetrates the soil cover and that thereafter the lower pointed part penetrates the soil cover and is brought down into the soil. Otherwise there is a risk that only the spikes penetrate the soil cover, which substantially makes the planting more difficult. Because of the fact that the anchoring device is somewhat longer than the sleeve fractual impressions are certainly obtained in the soil cover along the whole cross section periphery of the device. In manufacturing the anchoring device the scores 11 are provided on the outside thereof for the sake of simplicity and by letting the lower part of the anchoring device protrude somewhat past the lower part of the sleeve an initial folding of the anchoring device prior to the penetration of the soil cover is certainly obtained.

According to a further embodiment the anchoring device 7 can consist of at least two longitudinal sections which at their edge parts 8, 9 engage each other partly by the squeeze means 5 provided at the upper part 3 of the sleeve 1 partly by a second squeeze means (not shown) which is provided around the lower part of the sleeve and the anchoring device and which increases the contact surface of the device with a soil cover.

The device according to the invention has the following advantages.

1. Preparation, marking and packing can be made during the winter months and can be used as a season levelling work in nurseries.

2. Complete systems can be developed from growing in nurseries to planting on the plant locality comprising inter alia special holding racks, delivery racks, etc.

3. The device is adapted for mechanized planting.

4. In planting on soil cover a planting of the plant is achieved simultaneously with an anchoring of the cover.

5. Only one planting machine has to be developed which can be used for planting vegetables as well as nursery plants.

6. The device can be modified and be used within many various branches.

7. The device makes a simple construction of a planting machine possible which can be made in combination with a conventional machine for laying plastics foils.

Other embodiments are possible within the scope of the invention as defined by the claims. Thus, the planting sleeve itself, i.e. without the anchoring device, can have a means corresponding to the squeeze means shown in Fig. 3, applied on its upper part, said means having no squeezing effect when the sleeve is not divided into sections but serves as a carrier for the groove 13 to facilitate the use of the sleeve in a planting machine. Further, the sleeve can hold or contain a prestage of a plant, such as a cutting or simply a seed with a growing medium.

**Claims**

1. A device used to hold or contain a plant and its root medium for planting in soil, comprising a sleeve (1) having a wall formed with cutouts (2) extending in the longitudinal direction of the sleeve between circumferentially extending upper (3) and lower (4) parts, the upper and the lower parts being integrally formed with the rest of the wall of the sleeve, characterized in that the sleeve (1) is open at the bottom, spikes being formed in the lower part (4) of the sleeve.

2. A device according to claim 1, characterized in that the sleeve (1) has been weakened by notches (6) formed in the upper edge (3) of the sleeve, each notch (6) being located adjacent a cutout (2) and extending in longitudinal direction from the lower edge of the upper wall part (3) to a location at a distance from its upper edge.

3. A device according to any of the preceding claims, characterized in that the sleeve comprises at least two complementary parts extending in the longitudinal direction which are combined by a band or a lip extending at least partly around the upper edge (3) of the sleeve.

4. A device according to claim 1 for planting on a soil cover, characterized by an anchoring device (7) including an upper edge part (8) and a lower edge part (9) connected together by plural strips (10) extending in the longitudinal direction, the strips (10) having plural scores (11) formed in a plane lying transverse to the strips, the anchoring device (7) being adapted to surround the sleeve (1) so that the lower edge part (9) of the anchoring device during planting is pressed upwards as a force is applied to press the sleeve (1) downwards into the soil, the lower edge part (9) causing the strips (10) to buckle and fold towards each other about the scores (11) so that the folded strips overlie the soil cover and thereby retain the cover on the soil.

5. A device according to claim 4, characterized in that the sleeve (1) and the anchoring device (7) both have a circular cross section.

6. A device according to claim 4 or 5, characterized in that the length of the sleeve (1) is somewhat less than the length of the anchoring device (7).

7. A device according to claim 4, characterized in that the anchoring device (7) consists of at least two longitudinal sections which at their edge parts (8, 9) engage each other partly by a first squeeze means (5) provided at the upper edge (3) of the sleeve (1), partly by a second squeeze means provided around the lower parts of the sleeve (1) and the anchoring device (7) which latter means increases the contact surface of the device with the soil cover.

**Patentansprüche**

1. Anordnung, die eine Pflanze oder ihr Wurzelmedium zur Pflanzung in Erde umschliesst oder enthält und eine Hülse (1) mit einer Wand umfasst, die mit Ausschnitten (2) ausgebildet ist, welche sich längs der Hülse zwischen peripherischen oberen (3) und unteren (4) Teilen erstrecken, wobei die oberen und unteren Teile in einem Stück mit dem Rest der Hülsenwand geformt sind, dadurch gekennzeichnet, dass die Hülse (1) am Boden offen ist, wobei Spitzen im unteren Teile (4) der Hülse ausgestaltet sind.

2. Anordnung nach Anspruch 1, dadurch gekennzeichnet, dass die Hülse (1) durch im oberen Teile (3) der Hülse ausgebildete Einschnitte (6) geschwächt ist, wobei jeder Einschnitt (6) nahe an einem Ausschnitt (2) angeordnet ist und sich in der Längsrichtung von der unteren Kante des oberen Wandteils (3) bis zu einer Stelle entfernt von dessen oberer Kante erstreckt.

3. Anordnung nach einem der vorhergehenden Ansprüche, dadurch gekennzeichnet, dass die Hülse mindestens zwei zusätzliche Teile umfasst, die sich in der Längsrichtung erstrecken und mit einem Band oder Flansch verbunden sind, der sich mindestens teilweise rings um die obere Kante (3) der Hülse erstreckt.

4. Anordnung nach Anspruch 1 zur Pflanzung auf einer Erdedecke, gekennzeichnet durch eine Verankerungseinrichtung (7), die ein oberes Kantenteil (8) und ein unteres Kantenteil (9) umfasst, welche durch mehrere sich in der Längsrichtung erstreckende Streifen (10) miteinander verbunden sind, wobei die Streifen (10) mehrere in einer quer zu den Streifen liegenden Ebene ausgebildete Einschnitte (11) haben und die Verankerungseinrichtung (7) angeordnet ist, die Hülse (1) zu umgeben, so dass das untere Kantenteil (9) der Verankerungseinrichtung während der Pflanzung nach oben gepresst wird, wenn eine Kraft angebracht wird, um die Hülse (1) nach unten in die Erde zu pressen, wobei das untere Kantenteil (9) die Streifen (10) dazu bringt, sich zu verbeulen und gegeneinander um die Einschnitte (11) zu falten, so dass die gefalteten Streifen auf der Erdedecke liegen und dabei die Decke auf der Erde zurückhalten.

5. Anordnung nach Anspruch 4, dadurch gekennzeichnet, dass die Hülse (1) und die Verankerungseinrichtung (7) beide einen kreisförmigen Querschnitt haben.

6. Anordnung nach Anspruch 4 oder 5, dadurch gekennzeichnet, dass die Länge der Hülse (1) etwas kleiner ist als die Länge der Verankerungseinrichtung (7).

7. Anordnung nach Anspruch 4, dadurch gekennzeichnet, dass die Verankerungseinrichtung (7) aus mindestens zwei längsgehenden Sektionen besteht, die an ihren Kantenteilen (8, 9) teils durch ein erstes, an der oberen Kante (3) der Hülse (1) angebrachtes Klemmittel (5), teils durch ein zweites, an den unteren Teilen der Hülse (1) und der Verankerungseinrichtung (7) angebrachtes Klemmittel ineinander greifen, wobei das letztere Klemmittel die Kontaktfläche der Anordnung mit der Erdedecke vermehrt.

**Revendications**

1. Dispositif utilisé pour maintenir ou renfermer une plante et le milieu de sa racine pour leur plantation en terre, comprenant un manchon (1) dont la paroi présente des découpures (2) qui s'étendent dans le sens longitudinal du manchon entre une partie supérieure (3) et une partie inférieure (4) circonférentielles, les parties supérieure et inférieure étant façonnées en bloc avec le reste de la paroi du manchon, caractérisé en ce que le manchon (1) est ouvert en bas, des pointes étant formées à la partie inférieure (4) du manchon.

2. Dispositif selon la revendication 1, caractérisé en ce que le manchon (1) a été affaibli par des entailles (6) réalisées dans le bord supérieur (3) du manchon, chaque entaille (6) étant contiguë à une découpure (2) et s'étendant en direction longitudinale du bord inférieur de la partie supérieure (3) de la paroi jusqu'à un endroit situé à une certaine distance de son bord supérieur.

3. Dispositif selon une quelconque des revendications précédentes, caractérisé en ce que le manchon comprend au moins deux parties complémentaires s'étendant dans le sens longitudinal et reliées entre elles ou moyen d'une bande ou d'une lèvre s'étendant au moins partiellement autour du bord supérieur (3) du manchon.

4. Dispositif selon la revendication 1 pour planter sur une couverture du sol, caractérisé par un dispositif d'ancrage (7) comprenant une partie de bord supérieur (8) et une partie de bord inférieur (9) reliées entre elles au moyen de plusieurs bandes (10) s'étendant dans le sens longitudinal et présentant plusieurs encoches (11) formées dans un plan perpendiculaire aux bandes, le dispositif d'ancrage (7) étant adapté à entourer le manchon (1) de façon que la partie de bord inférieur (9) du dispositif d'ancrage soit poussée vers le haut, au cours de la plantation, lorsqu'une force est appliquée pour pousser le manchon (1) vers le bas pour l'enfoncer dans le sol, la partie de bord inférieur (9) faisant arquer les bandes (10) qui se replient ainsi l'une vers l'autre de part et d'autre des encoches (11), de manière que les bandes repliées viennent se superposer à la couverture du sol, retenant ainsi celle-ci au sol.

5. Dispositif selon la revendication 4, caractérisé en ce que le manchon (1) et le dispositif d'ancrage (7) présentent, tous les deux, une section transversale circulaire.

6. Dispositif selon l'une des revendications 4 et 5, caractérisé en ce que la longueur du manchon (1) est légèrement inférieure à celle du dispositif d'ancrage (7).

7. Dispositif selon la revendication 4, caractérisé en ce que le dispositif d'ancrage (7) est constitué par au moins deux sections longitudinales qui, dans leurs parties de bord (8, 9), viennent en contact l'une avec l'autre, d'une part au moyen d'un premier moyen de serrage (5) prévu au bord supérieur (3) du manchon (1), d'autre part au moyen d'un second moyen de serrage prévu autour des parties inférieures du manchon (1) et du dispositif d'ancrage (7), ce dernier moyen augmentant la surface de contact du dispositif avec la couverture du sol.

Fig.3

13
12

Fig.2

7
8
10
11
9

Fig.1

3
6
1
2
4

1